Europäisches Patentamt

European Patent Office

Office européen des brevets

(19)

(11) Numéro de publication: **0 234 633**
**B1**

## (12) FASCICULE DE BREVET EUROPEEN

(45) Date de publication du fascicule du brevet:
18.07.90

(51) Int. Cl.⁵: **F02K 9/38**
// F02K9/26, F02K9/80

(21) Numéro de dépôt: 87200195.3

(22) Date de dépôt: 09.02.87

(54) Dispositif pour la stabilisation énergétique d'un générateur de gaz chauds.

(30) Priorité: 18.02.86 IT 6711986

(43) Date de publication de la demande:
02.09.87 Bulletin 87/36

(45) Mention de la délivrance du brevet:
18.07.90 Bulletin 90/29

(84) Etats contractants désignés:
DE FR GB

(56) Documents cités:
DE-C- 316 565
FR-A- 1 128 730
FR-A- 1 178 470
FR-A- 2 278 230
US-A- 2 736 459

(73) Titulaire: **Microtecnica S.p.A., Via Madama Cristina 147,
10126 Torino(IT)**

(72) Inventeur: **Lucchi, Roberto, Via Mazzolari 15 bis,
I-10048 Vinovo(IT)**
Inventeur: **Seren Rosso, Angelo, Via Morghen 28,
I-10143 Torino(IT)**

(74) Mandataire: **Patrito, Pier Franco, Dr. Ing., Cabinet
PATRITO BREVETTI Via Don Minzoni 14,
I-10121 Torino(IT)**

# Description

La présente invention a pour objet un dispositif pour la stabilisation énergétique d'un générateur de gaz chauds à agent propulsif solide, à double stade, avec un dispositif de décharge du débit de gaz en excès.

Les générateurs de gaz chauds (à des températures plus hautes que 1000 °K) à agent propulsif solide à double stade sont destinés à alimenter un utilisateur, généralement un effuseur qui, avec le générateur de gaz, constitue un endoréacteur de propulsion à poussée duelle, capable de réaliser une phase d'impulsion suivie par une phase de régime. Dans ces générateurs, le débit de gaz chauds engendrés doit être proportionné aux exigences de la phase d'impulsion, et en général il résulte excessif pour la phase successive de régime. Le contrôle des performances du générateur est obtenu au moyen d'un dispositif de décharge du débit en excès, lequel doit être activé avec un certain retard après le moment d'allumage, afin que toute l'énergie produite puisse être utilisée pendant la phase d'impulsion pour arriver dans un court laps de temps aux performances de régime. Cependant on rencontre des problèmes soit à cause de la nécessité, aux fins de la sécurité, de garantir que même pendant la phase d'impulsion les conditions maximum de pression admissibles ne puissent pas être surmontées, soit en vue de l'opportunité d'établir pour l'activation de la décharge un retard qui tienne compte des conditions ambiantes, susceptibles de modifier les performances propulsives, soit encore à cause de la nécessité d'effectuer les interventions nécessaires au moyen d'appareillages de construction simple, de fonctionnement extrêmement fiable et de poids et d'encombrement le plus possible limités.

Le but de la présente invention est de réaliser un dispositif pour la stabilisation énergétique d'un générateur de gaz chauds, capable de répondre de la meilleure manière aux exigences ci-dessus indiquées.

Suivant US-A 2 736 459 il est connu d'employer un élément pyrotechnique pour commander l'ouverture d'un passage pour un gaz mis en pression. Suivant ce document le passage est fermé par un diaphragme, et la fonction de l'élément pyrotechnique est de détruire ce diaphragme pour ouvrir le passage. La mise de feu de l'élément pyrotechnique est effectuée par un dispositif de mise de feu commandé de l'extérieur.

Suivant FR-A 1 178 470 il est aussi connu de modifier la section de passage d'une tuyère moyennant un obturateur mobile qui est sollicité vers une position de fermeture par un moyen élastique et qui peut être ouvert par l'action des gaz de propulsion.

Pour atteindre le but indiqué, l'invention propose un dispositif pour la stabilisation énergétique d'un générateur de gaz chauds du type à agent propulsif solide, à double stade, avec dispositif de décharge du débit de gaz en excès, comprenant un élément pyrotechnique disposé pour commander l'ouverture d'un passage pour le gaz et aussi comprenant un obturateur mobile sollicité vers une position de fermeture par un moyen élastique et qui peut être ouvert par l'action des gaz de propulsion, caractérisé en ce que, dans ledit dispositif de décharge du débit de gaz en excès, un élément pyrotechnique est disposé de manière à fermer lui-même un premier passage allant à une conduite d'écoulement pour les gaz en excès et d'être soumis à l'action de ces gaz, et un obturateur mobile également soumis à l'action des gaz est maintenu par des moyens élastiques dans une condition de fermeture d'un deuxième passage allant à ladite conduite d'écoulement, indépendamment de la présence dudit élément pyrotechnique; lesdits deux moyens de fermeture d'un passage allant à la conduite d'écoulement pour les gaz en excès étant réunis de sorte à constituer physiquement un seul dispositif.

Grâce à ces dispositions, l'élément pyrotechnique assujetti à l'action des gaz engendrés subit une combustion dont la rapidité dépend de la pression des gaz mêmes, laquelle à son tour est une fonction de la température ambiante, et il tend ainsi à libérer la conduite d'écoulement dans un temps optimal variable en fonction des conditions effectives, tandis que l'obturateur donne lieu, indépendamment de l'élément pyrotechnique et, par conséquent, aussi des anomalies possibles dans son comportement, à l'ouverture de la décharge en cas de surpression, en fournissant ainsi les garanties nécessaires de sécurité. La fusion en un seul dispositif physique des deux moyens d'ouverture de la conduite d'écoulement permet la réalisation de l'appareil tout entier en une forme compacte, constructivement simple et d'un poids réduit.

Ces caractéristiques et d'autres et les avantages de l'objet de l'invention ressortiront plus clairement de la suivante description d'une forme de réalisation, donnée à titre d'exemple non limitatif, représentée schématiquement dans le dessin annexé, dans lequel:

Fig. 1 est un bloc-diagramme logique du dispositif, et

Fig. 2 représente en section axiale une réalisation du dispositif selon l'invention.

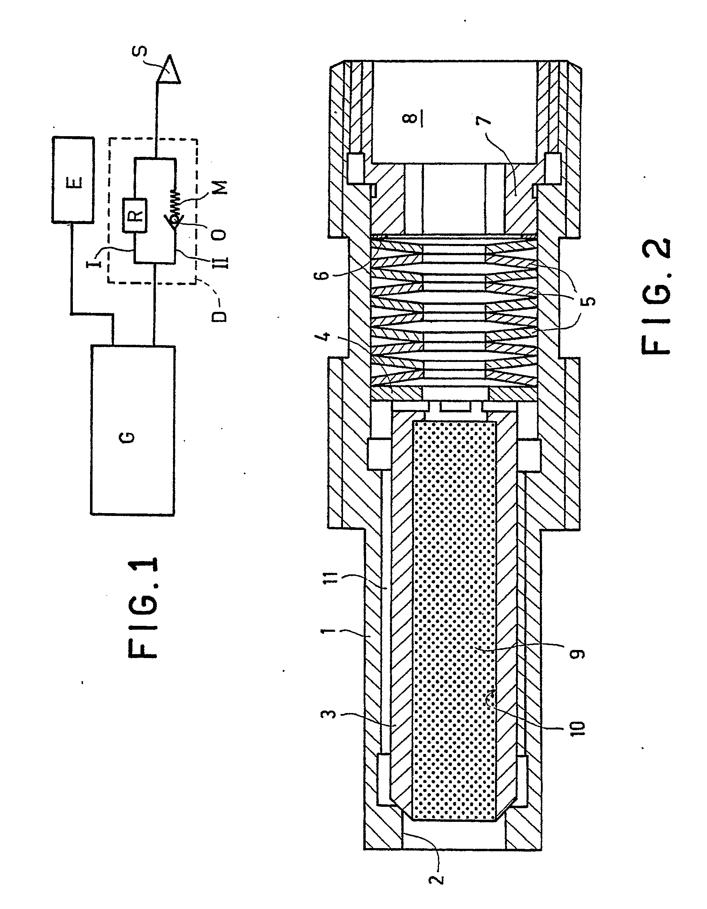

Faisant référence d'abord à la figure 1, la lettre G indique un générateur de gaz chauds, constitué par un réservoir contenant un agent propulsif solide et formant aussi la chambre de combustion pour la réaction chimique de l'agent propulsif et pour l'engendrement des gaz chauds; ces derniers sont amenés à un utilisateur, tel qu'un effuseur E qui pourvoit à leur expansion et à la production de la poussée propulsive. Cependant, la chambre de combustion du générateur G communique aussi avec un dispositif D de décharge des gaz en excès. Ce dispositif comprend un moyen de retard R, formé par un élément pyrotechnique qui ferme un passage I allant à une décharge S, et une soupape constituée par un obturateur O chargé par la force élastique de précharge d'un ressort M, lequel obturateur ferme aussi, en parallèle au moyen de retard R, un passage II allant à la décharge S. Il résulte de cette disposition que le passage allant du générateur de gaz G à la décharge S est ouvert systématiquement, après un temps prédéterminé à partir de l'allumage de l'agent propulsif, par le moyen de retard R, mais qu'il peut être aussi ouvert par l'obturateur O, indépendamment de la condition du moyen de retard R, si la pression du gaz engendré surmonte la force de précharge du ressort M.

L'élément pyrotechnique formant le moyen de retard R, dans le dispositif selon l'invention, est assujetti à une combustion calibrée, qui se déroule d'autant plus rapidement que la pression des gaz engendrés qui agissent sur l'élément pyrotechnique est plus haute. Cela est en accord avec le fait que, plus la pression dans la chambre de combustion est haute, d'autant plus rapidement on atteint la condition de régime de la part de l'utilisateur, et d'autant plus court doit être le temps de retard à l'ouverture de la décharge S. Puisque la pression dans la chambre de combustion est, a son tour, une fonction de la température ambiante, on tient compte aussi de ce paramètre dans le fonctionnement du dispositif lequel, de cette manière, dimensionné d'une façon appropriée, tend à réaliser une période optimale de retard en fonction des conditions effectives de fonctionnement.

De son côté, la soupape constituée par l'obturateur O avec son ressort M ouvre la décharge S si, dans n'importe quelle condition de fonctionnement, la pression des gaz engendrés, multipliée par la surface offerte à son action par l'obturateur O, surmonte la force de précharge du ressort M. Par conséquent, en réglant d'une façon appropriée la précharge dudit ressort, on impose une limite de sécurité, qui ne peut pas être dépassé, à la pression des gaz engendrés. La soupape entre en fonction soit dans le cas où la pression augmente d'une manière anormale pendant la période de retard déterminée par l'élément pyrotechnique R, soit dans le cas où cette pression augmente à cause d'un fonctionnement anormal de l'élément pyrotechnique même. De ce fait, la soupape empêche systématiquement toute augmentation de pression qui pourrait dégénérer en un phénomène explosif, en garantissant ainsi la sécurité du système constitué par le générateur de gaz et par l'utilisateur respectif.

Faisant référence à la figure 2, le dispositif selon l'invention, dans la forme de réalisation préférée représentée, comprend un corps creux 1 ayant une ouverture d'entrée 2, destinée à communiquer avec le générateur de gaz et formant intérieurement un siège de fermeture. Dans la cavité interne du corps 1 est monté un fourreau 3, dont une extrémité est capable de faire étanchéité sur le siège de l'entrée 2, en faisant ainsi fonction d'obturateur. Contre l'extrémité opposée du fourreau 3 agit, à travers une rondelle 4, un paquet de ressorts tronconiques (ainsi dit ressort Bauer) 5, retenu par une douille 7 fixée au corps 1 et définissant une ouverture de sortie 8, destinée à être reliée à une décharge pour l'écoulement des gaz en excès. Une ou plusieurs rondelles de calibration 6 sont insérées entre la douille 7 et le paquet de ressorts 5. Enfin, un élément pyrotechnique 9 est logé dans la cavité du fourreau 3.

Les ressorts 5, dont la précharge, dans l'état de coaction imposé par la douille 7, peut être réglée à l'aide de l'épaisseur de la ou des rondelles de calibration 6, définissent la force par laquelle l'obturateur 3 est poussé contre le siège d'entrée 2, et la surface de ce dernier définit l'aire sur laquelle agit la pression des gaz engendrés. Lorsque le produit de cette aire par la pression effective des gaz surmonte la force exercée sur l'obturateur par les ressorts 5, l'obturateur 3 est éloigné du siège de l'entrée 2 et les gaz peuvent s'échapper par un passage 11 entourant l'obturateur 3 en arrivant à la sortie 8. L'élément pyrotechnique 9, de son côté, lorsqu'il est entièrement consommé, laisse libre et accessible le passage intérieur 10 du fourreau 3, en acheminant les gaz en excès vers la sortie 8.

La construction selon la figure 2, et particulièrement le fait que l'élément pyrotechnique 9 est logé précisément dans la cavité du fourreau 3 qui forme l'obturateur, donnent lieu à une construction très compacte et légère du dispositif, lequel en même temps résulte de construction simple et relativement économique. La grande simplicité constructive et fonctionnelle, ainsi que l'absence de n'importe quel élément susceptible de se détériorer, conduit à une grande fiabilité de fonctionnement.

Bien entendu, la forme constructive des détails formant le dispositif selon l'invention peut varier pour s'adapter aux exigences de chaque application. Ainsi, par exemple, le paquet de ressorts tronconiques 5 peut être remplacé par un ressort en hélice ou par un autre élément élastique approprié; la douille 7 peut être vissée ou fixée d'une autre façon dans le corps 1, ou bien elle peut constituer directement une extrémité du corps même; des moyens différents des rondelles de calibration 6 peuvent être prévus pour mettre au point la précharge du ressort.

**Revendications**

1. Dispositif pour la stabilisation énergétique d'un générateur de gaz chauds du type à agent propulsif solide, à double stade, avec dispositif (D) de décharge du débit de gaz en excès, comprenant un élément pyrotechnique (R, 9) disposé pour commander l'ouverture d'un passage (I, 10) pour les gaz et aussi comprenant un obturateur mobile (0, 3) sollicité vers une position de fermeture par un moyen élastique (M, 5) et qui peut être ouvert par l'action des gaz de propulsion, caractérisé en ce que, dans ledit dispositif (D) de décharge du débit des gaz en excès, un élément pyrotechnique (R, 9) est disposé de manière à fermer lui-même un premier passage (I, 10) allant à une conduite (S, 8) d'écoulement pour les gaz en excès et d'être soumis à l'action de ces gaz, et un obturateur mobile (0, 3) également soumis à l'action des gaz est maintenu par des moyens élastiques (M, 5) dans une condition de fermeture d'un deuxième passage (II, 11) allant à ladite conduite de décharge (S, 8), indépendamment de la présence dudit élément pyrotechnique (R, 9); lesdits deux moyens (R, 9; 0, 3) de fermeture d'un passage allant à la conduite (2, 8) de décharge pour les gaz en excès étant réunis de manière à former physiquement un seul dispositif (D).

2. Dispositif de stabilisation selon la revendication 1, caractérisé en ce que ledit élément pyrotech-

5  EP 0 234 633 B1  6

nique (R) et ledit obturateur (O) avec des moyens élastiques (M) sont disposés l'un en parallèle de l'autre (Fig. 1) afin de résulter fonctionnellement indépendants.

3. Dispositif de stabilisation selon la revendication , caractérisé en ce qu'il comprend un corps (1) avec une ouverture d'entrée (2) formant un siège d'étanchéité, un obturateur (3), mobile entre ledit corps (1) et poussé par un ressort (5) vers la position de fermeture sur ledit siège d'étanchéité (2), un premier passage de décharge (10) traversant ledit obturateur (3) et un second passage de décharge (11) entourant ledit obturateur (3) et contrôlé par la coopération dudit obturateur (3) avec ledit siège d'étanchéité; et que ledit élément pyrotechnique (9) est logé dans ledit premier passage de décharge (10) traversant ledit obturateur (3) et il ferme ce passage.

4. Dispositif de stabilisation selon la revendication 3, caractérisé en ce que la condition de précharge dudit ressort (5) est rendue réglable par des moyens de mise à point, tels que des rondelles de calibration (6).

**Patentansprüche**

1. Vorrichtung zur Energiestabilisierung eines Heissgaserzeugers, und zwar eines mit Festtreibstoff betriebenen Zweistufenerzeugers mit Auslassvorrichtung (D) für die überschüssigen Gasmengen, mit einem pyrotechnischen Element (R, 9) zum Steuern der Öffnung eines Gasdurchganges (I, 10) und mit einem beweglichen Verschluss (0, 3), der durch ein elastisches Mittel (M, 5) in Schliesstellung gedrängt wird und der durch die Wirkung der Treibgase geöffnet werden kann, dadurch gekennzeichnet, dass in der Auslassvorrichtung (D) für die überschüssigen Gasmengen ein pyrotechnisches Element (R, 9) so angeordnet ist, dass es einen ersten Durchgang (I, 10) von selbst schliesst, der zu einer Auslassleitung (S, 8) der überschüssigen Gasmengen führt und auf den diese Gase ihre Wirkung ausüben, und dass ein beweglicher Verschluss (0, 3), auf den die Gase ebenfalls ihre Wirkung ausüben, durch elastische Mittel (M, 5) in der Schliessstellung eines zweiten Durchganges (II, 11) gehalten wird, der unabhängig von der Anwesenheit des pyrotechnischen Elements (R, 9) ebenfalls zur Auslassleitung (S, 8) führt, wobei die beiden Elemente (R, 9; 0, 3), die einen zur Auslassleitung (S, 8) für die überschüssigen Gasmengen führenden Durchgang schliessen, miteinander verbunden sind und somit einen einzigen Körper für die Vorrichtung (D) physikalisch bilden.

2. Stabilisierungsvorrichtung nach Anspruch 1, dadurch gekennzeichnet, dass das pyrotechnische Element (R) und der Verschluss (0) mit den elastischen Mitteln (M) parallel zueinander angeordnet sind (Fig. 1), um funktionsmässig voneinander unabhängig zu sein.

3. Stabilisierungsvorrichtung nach Anspruch 1, dadurch gekennzeichnet, dass dieselbe einen Körper (1) mit einer einen Dichtsitz bildenden Einlassöffnung (2), einen innerhalb des Körpers (1) beweglichen und durch eine Feder (5) in Richtung der Schliesstellung gegen den Dichtsitz (2) gedrückten Verschluss (3), einen ersten durch den Verschluss (3) verlaufenden Auslassdurchgang (10) und einen zweiten, den Verschluss (3) umgebenden und durch die Zusammenwirkung von Verschluss (3) und Dichtsitz kontrollierten Auslassdurchgang (11) aufweist, wobei das pyrotechnische Element (9) im ersten, durch den Verschluss (3) verlaufenden Auslassdurchgang (10) angeordnet ist und denselben verschliesst.

4. Stabilisierungsvorrichtung nach Anspruch 3, dadurch gekennzeichnet, dass sich der Vorspannungszustand der Feder (5) durch Einstellmittel, wie etwa Unterlegscheiben (6), einstellen lässt.

**Claims**

1. A device for the energetic stabilization of a hot gas generator of the two-stage type using a solid propellant agent, with a device (D) for discharging the gas overflow, comprising a pyrotechnic element (R, 9) arranged for controlling the opening of a passageway (I, 10) for the gases, and further comprising a movable shutter (0, 3) urged towards a closure position by an elastic means (M, 5) and suitable for being opened by the action of the propulsion gases, characterized in that, within said device (D) for discharging the gas overflow, a pyrotechnic element (R, 9) is located in such a manner as to close a first passageway (I, 10) which leads to a discharge conduit (2, 8) for the excess gases and as to be subjected to the action of these gases, and that a movable shutter (0, 3) also subjected to the action of the gases is kept by elastic means (M, 5) in a condition in which it closes a second passageway (II, 11) which leads to said discharge conduit (S, 8), irrespective of the presence of said pyrotechnic element (R, 9); both said means (R, 9; 0, 3) for closing a passageway which leads to the discharge conduit (S, 8) for the excess gases being joined together so as to physically form a sole device (D).

2. A stabilization device according to Claim 1, characterized in that said pyrotechnic element (R) and said shutter (0) urged by elastic means (M) are branched in parallel the one another (Fig. 1) in order to be operatively independent.

3. A stabilization device according to Claim 1, characterized in that it comprises a body (1) having an intake (2) forming a closure seat, a shutter (3), movable within said body (1) and urged by a spring (5) towards the position in which it closes said closure seat (2), a first discharge passageway (10) which traverses said shutter (3), and a second discharge passageway (11) surrounding said shutter (3) and controlled by the co-operation of said shutter (3) and said closure seat; and in that said pyrotechnic element (9) is housed within said first discharge passageway (10) which traverses said shutter (3), and closes said passageway.

4. A stabilization device according to Claim 3, characterized in that the precharge condition of said spring (5) is made adjustable by setup means, such as calibration washers (6).

4

FIG.1

FIG.2